# EUROPEAN PATENT SPECIFICATION

(11) **EP 3 773 327 B1**
(45) Date of publication and mention of the grant of the patent: **05.06.2024**
(21) Application number: 19718601.8
(22) Date of filing: 08.04.2019
(51) Int. Cl.: A61C 19/06

(54) **MANIFOLD ASSEMBLY FOR APPLYING WHITENING GELS AND OTHER ORAL CARE COMPOUNDS TO MOUTHPIECES**
VERTEILERANORDNUNG ZUM AUFTRAGEN VON AUFHELLUNGSGELEN UND ANDEREN MUNDPFLEGEZUSAMMENSETZUNGEN AUF MUNDSTÜCKE
ENSEMBLE COLLECTEUR POUR APPLIQUER DES GELS BLANCHISSANTS ET D'AUTRES COMPOSÉS DE SOINS BUCCO-DENTAIRES À DES EMBOUTS BUCCAUX

(30) Priority: 13.04.2018 US 201862657204 P
(43) Date of publication of application: 17.02.2021
(73) Proprietor: Koninklijke Philips N.V., 5656 AG Eindhoven (NL)
(72) Inventor: FOSTER, Regan, Starkey, 5656 AE Eindhoven (NL)
(74) Representative: Philips Intellectual Property & Standards
(86) International application number: PCT/EP2019/058757
(87) International publication number: WO 2019/197310

(56) References cited:
- WO-A1-92/02190
- WO-A1-2016/137617
- US-A1- 2004 234 929
- US-B1- 6 193 114

## Description

### Field of the Invention

The present disclosure is directed generally to oral care systems for applying an oral care compound to a working surface of a mouthpiece.

### Background

WO2016/137617 discloses an oral treatment system that emits electromagnetic radiation onto surfaces of a user's teeth and which may also dispense an oral treatment material for contact with the user's teeth.

WO92/02190 discloses a method for whitening the teeth of a person, comprising the steps of heating a retainer until soft and moldable without losing its basic shape, fitting the retainer around one of the upper and lower teeth, applying a layer of tooth whitening composition inside the retainer, wearing the loaded retainer for several hours each day until the teeth to be whitened have become whiter, replacing the tooth whitening composition every 1-2 hours, and repeating these steps with another retainer for the other of lower and upper teeth.

US2004/234929 discloses a dental treatment system comprising a membrane treatment tray that is self-conforming to a person's teeth when used with a sticky dental treatment composition and a support skeleton, wherein the support skeleton maintains the form of the flexible membrane tray prior to placing the tray over a person's teeth, wherein a sticky viscous composition is either provided in or applied to the membrane tray, and wherein the treatment system is placed so as to position the membrane tray over the upper or lower teeth of the person.

US 6,193,114 discloses a toothpaste dispenser comprising a main body member having a plurality of tubular spouts, from which an individual can dispense toothpaste from his or her own personally assigned tubular spout permanently marked by indicia.

Oral care compounds, such as tooth whitening gels, are traditionally stored in a syringe that enables a user to apply the gel onto a working surface of a mouthpiece for end use. These syringes are typically assembled with a small tip nozzle which extrudes a single stream of gel. This assembly requires the user to both depress the syringe plunger while locating the syringe tip in a coordinated manner to evenly distribute the gel onto the working surface of the mouthpiece. As such, it can be challenging for the user to simultaneously push the syringe plunger, follow a narrow path with the nozzle tip, and move the tip at a coordinated speed to match the rate that the gel is dispensed from the syringe. Particularly for unpracticed users, this may lead to user error and improper gel distribution on the mouthpiece. An uneven or poor distribution may affect the efficacy of the whitening process or other oral care treatment.

Accordingly, there is a continued need in the art for systems and methods for applying whitening gels and other oral care compounds to the working surfaces of mouthpieces.

### Summary of the Invention

The invention is defined by the independent claims. The dependent claims define advantageous embodiments.

The present disclosure is directed to inventive oral care systems and methods for applying an oral care compound to the working surface of a mouthpiece with a desired distribution. The oral care system includes a manifold having an inlet for receiving the oral care compound or a pressurization source for the oral care compound and an outlet with one or more ports for dispensing the oral care compound. The outlet is arranged to align the one or more ports with the working surface of the mouthpiece when the outlet is engaged with the mouthpiece. An injection assembly, with an actuatable element such as a plunger, may be included to pressurize the oral care compound and cause the oral care compound to be dispensed via the ports in the outlet.

The manifold assembly separates a single flow of gel into the many output ports and/or along the designated length of an outlet, so that it can be applied with a desired distribution to the working surfaces of the mouthpiece. The manifold assembly includes multiple successive levels of separation for the flow as it progresses through the manifold assembly. The final level of separation may be achieved by the one or more ports, while other levels of separation may be created by partitions in the flow path that separates the flow path into two or more branches. Chambers, pockets, or other relatively low pressure volumes (e.g., having flow areas that are larger than the flow areas of surrounding features) may be included that enable the pressure of the oral care compound to equalize at certain points throughout the manifold. That is, the low pressure volumes are arranged to fill with the oral care compound first, before the flow moves through a feature with a relatively restricted flow area (e.g., port, channel, etc.) at the next level of separation.

Advantageously, the manifold assemblies disclosed herein do not require a dexterous manipulation by a user and the pressurization and/or speed of dispensing is immaterial to the distribution profile. By dissociating functions such as syringe nozzle tip location and gel dispensing speed, the manifold assemblies disclosed herein enable users to more evenly or accurately apply oral care compounds in the proper location and to control the volume of gel dispensed.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is an exploded perspective view of an oral care system according to one embodiment disclosed herein.
FIG. 2 is a top view of a manifold assembly according to one embodiment disclosed herein.
FIG. 3 is an enlarged view of an outlet of the manifold assembly of FIG. 2.
FIG. 4 is a schematic view of a manifold assembly according to one embodiment disclosed herein.
FIG. 5 is a schematic view of a manifold assembly according to one embodiment disclosed herein.
FIGS. 6-9 show progression of an oral care compound through different levels or stages of a manifold assembly according to one embodiment disclosed herein.
FIG. 10 is a top view of a manifold assembly according to one embodiment disclosed herein.
FIG. 11 is a side view of the manifold assembly of FIG. 10.

### Detailed Description of Embodiments

The present disclosure describes various embodiments of manifold assemblies for facilitating the dispensing of oral care compounds with desired distribution profiles. More generally, Applicant has recognized and appreciated that it would be beneficial to provide an oral care system for applying an oral care compound to a mouthpiece with a manifold assembly engagable with the mouthpiece. A particular goal of utilization of certain embodiments of the present disclosure is to enable a user to apply an oral care compound to a working surface of a mouthpiece with a desired distribution without requiring dexterous manipulation by the user.

In view of the foregoing, various embodiments and implementations are directed to oral care systems and methods for applying an oral care compound to the working surface of a mouthpiece with a desired distribution. The oral care system includes a manifold having an inlet for receiving the oral care compound or a pressurization source for the oral care compound and an outlet with one or more ports for dispensing the oral care compound. The outlet is arranged to align the one or more ports with the working surface of the mouthpiece when the outlet is engaged with the mouthpiece. An injection assembly, with an actuatable element such as a plunger, may be included to pressurize the oral care compound and cause the oral care compound to be dispensed via the ports in the outlet.

The manifold assembly separates a single flow of gel into the many output ports and/or along the designated length of an outlet, so that it can be applied with a desired distribution to the working surfaces of the mouthpiece. The manifold assembly includes multiple successive levels of separation for the flow as it progresses through the manifold assembly. The final level of separation may be achieved by the one or more ports, while other levels of separation may be created by partitions in the flow path that separates the flow path into two or more branches. Chambers, pockets, or other relatively low pressure volumes (e.g., having flow areas that are larger than the flow areas of surrounding features) may be included that enable the pressure of the oral care compound to equalize at certain points throughout the manifold. That is, the low pressure volumes are arranged to fill with the oral care compound first, before the flow moves through a feature with a relatively restricted flow area (e.g., port, channel, etc.) at the next level of separation.

Advantageously, the manifold assemblies disclosed herein do not require a dexterous manipulation by a user and the pressurization and/or speed of dispensing is immaterial to the distribution profile. By dissociating functions such as syringe nozzle tip location and gel dispensing speed, the manifold assemblies disclosed herein enable users to more evenly or accurately apply oral care compounds in the proper location and to control the volume of gel dispensed.

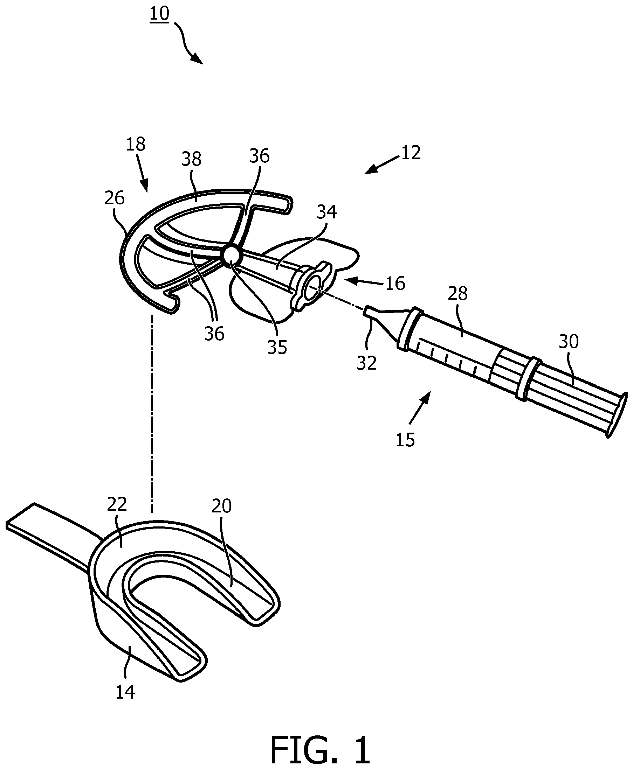

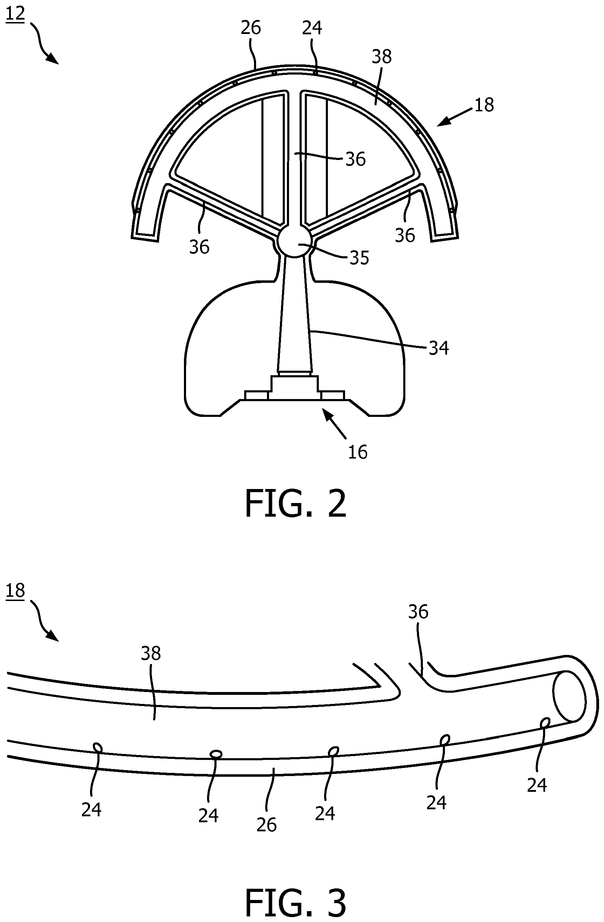

Referring to FIG. 1, in one embodiment, an oral care system 10 is provided with a manifold assembly 12, a mouthpiece 14, and an injector assembly 15. A top view of the manifold assembly 12 is also illustrated in FIG. 2. As discussed in more detail herein, the manifold assembly 12 is configured to assist in the application of an oral care compound from the injector assembly 15 to the mouthpiece 14. The term "oral care compound" as used herein includes any substance, typically in the form of a liquid, gel, or other flowable material, that is useful in providing an oral care treatment, such as a tooth whitening gel, cleaning solution, medication, etc. The manifold assembly 12 includes an inlet 16 configured to receive the oral care compound from the injector assembly 15 and an outlet 18 configured to apply the oral care compound to one or more working surfaces of the mouthpiece 14. An enlarged view of a portion of the outlet 18 is also illustrated in FIG. 3.

The shape of the outlet 18 of the manifold assembly 12 may be matched to the geometry of the working surfaces in the mouthpiece 14 (i.e., the surfaces of the mouthpiece 14 that are arranged to assist in application of the oral care compound to the user's teeth). For example, the mouthpiece 14 may include a trough 20 arranged to receive a user's teeth. In this embodiment, a working surface 22 is arranged to be positioned in close proximity with the front surface of a user's teeth when the user is wearing the mouthpiece 14. In this way, the working surface 22 will assist in applying any oral care compound distributed on the working surface 22 to the front surface of a user's teeth (e.g., in order to whiten the front surface of the user's teeth if a whitening compound is used with the system 10). It is to be appreciated that this is just one example, and that in other oral care treatments, it may be desirable for the oral care compound to be applied to other areas of a user's teeth, e.g., all surfaces, the chewing surfaces, along the gumline, etc., and thus the output an oral care compound from the manifold assembly 12 can accordingly be provided to the corresponding areas or surfaces of the mouthpiece 14.

Since the working surface 22 shown in mouthpiece 14 is in a U or arch shape in the illustrated embodiment of FIG. 1, the outlet 18 of the manifold assembly 12 takes a complementary shape that enables the outlet 18 to be positioned relative to the working surface 22. For example, the outlet 18 may be received in the trough 20 with a plurality of ports 24 (best seen in FIG. 3) formed in an outer wall 26 of the outlet 18 positioned facing the working surface 22. In this way, as the oral compound exits the manifold assembly 12 via the ports 24 of the outlet 18, the oral care compound is applied to and distributed along the working surface 22 of mouthpiece 14. The ports 24 may take any desired shape or size to obtain a desired flow distribution, as discussed in more detail below. In one embodiment, instead of multiple discrete ports of circular cross-section, the outlet of a manifold assembly may include a single slit extending across the length of the working surface of the mouthpiece, or multiple slits to distribute the oral care compound at selected locations.

It is to be appreciated that the mouthpiece 14 is provided as one representative example in FIG. 1, but that mouthpieces of various shapes, sizes, and/or features may be included in the system 10. For example, the mouthpiece 14 may be custom formed with respect to and/or for a particular user's mouth, include individually-shaped compartments for each tooth, include larger or smaller side walls, etc. It is also to be appreciated that the term "mouthpiece" as used herein includes any oral care tray or oral care strip or device that at least partially envelopes, contacts, or is positioned adjacent a user's teeth for applying an oral care compound to the teeth as part of a whitening, cleaning, or other oral care treatment. It is to be understood that the outlet 18 can be complementarily formed with respect to the particular shape or geometry of the "mouthpiece" 14, particularly the working surfaces 22 of the mouthpiece 14.

The injector assembly 15 is illustrated in FIG. 1 in the form of a syringe having a hollow body 28, a plunger 30, and a nozzle 32. Depressing the plunger 30 (e.g., manually by a user) into the hollow body 28 causes the plunger 30 to displace oral care compound (e.g., whitening gel or other substance) from the hollow body 28 out of the nozzle 32. It is to be appreciated that the volume of oral care compound dispensed by the manifold assembly 12 can be controlled by the displacement of the plunger 30. That is, the dimensions of the plunger 30, e.g., length and surface area, can be used to set a predetermined amount of oral care compound that will be displaced through the manifold assembly 12, and thus, the amount that will be dispensed by the outlet 18. For example, the amount dispensed can be determined by subtracting the empty volume within the manifold assembly 12 from the total volume displaced by the plunger 30. The parameters of other actuatable elements can similarly be tailored to provide for a predetermined volume of dispensed oral care compound.

The inlet 16 of the manifold assembly 12 is arranged to receive the nozzle of a corresponding oral care compound injector, such as the nozzle 32 of the injector assembly 15. For example, the inlet 16 may be complementarily formed with respect to the shape of the nozzle 32, e.g., include a tapered receptacle for receiving the nozzle 32 in accordance with the embodiment of FIG. 1. The inlet 16 may include threads, a snap fit, or other feature for securing the nozzle 32 to the manifold assembly 12 during injection of an oral care compound. In one embodiment, some or all of the injector assembly 15 is integrally formed with the manifold assembly 12. For example, in one embodiment, an actuatable element, e.g., the plunger 30 of the injector assembly 15 is arranged to actuate directly within a portion of the manifold assembly 12, such as within a trunk 34 of the inlet 16.

Similar to the mouthpiece 14, it is to be appreciated that the injector assembly 15 may be arranged with any desired size, shape, and/or features and that the syringe embodiment of FIG. 1 is just one non-limiting construction. For example, the plunger 30 may be depressed by an electrically powered actuator, be actuated manually by pulling a trigger similar to a caulk gun, etc. Additionally, actuatable elements other than a linearly actuated plunger may be used to force an oral care compound through the outlet 18 of the manifold assembly 12, such as a screw, rotary vane, peristaltic, gear, or other type of pump or pumping mechanism, etc. In one embodiment, the manifold assembly 12 is at least partially pre-filled with the oral care compound. In one embodiment, the inlet 16 is configured to receive a fluid or material other than the oral care compound, and the injector is configured to provide a pressure source other than the oral care compound (e.g., a different pressurized fluid) to displace the oral care compound through the manifold assembly 12 and dispensing the oral care compound from the outlet 18.

The trunk 34 of the inlet 16 splits or branches into a plurality of channels 36. Thus, the manifold assembly 12 separates a single flow from the injector assembly 15 into multiple flows through each of the channels 36. The channels 36 may be arranged so that the flow rate is approximately equal through each of the ports 24 (thereby evenly distributing the oral care compound along the entire working surface of the mouthpiece). For example, as illustrated in FIGS. 1-3, the channels 36 are symmetrically arranged with respect to the input direction of oral care compound from the trunk 34, thereby promoting symmetrical output at the outlet 18. Additionally, the volume at a junction 35 between the trunk 34 and the channels 36 may be bulbous as illustrated, or otherwise relatively enlarged, particularly with respect to the cross-sectional flow area of the channels 36. In this way, flow from the trunk 34 will first fill the enlarged volume at the junction 35 before being forced down each of the channels 36, thereby promoting equal flow through each of the channels 36. Alternatively, the channels 36 may be arranged such that the flow rate varies through the ports 24, for varies distribution volume of the oral care compound at different locations along the working surface of the mouthpiece.

The manifold assembly 12 may also include a chamber 38 in communication with the ports 24. The chamber 38 may be formed within or by the outer wall 26 of the manifold assembly, and thus be complementarily formed with respect to the geometry of the mouthpiece 14 and/or the working surface 22 (e.g., in a U-shape as illustrated, having the ports 24 distributed along its length). Similar to the enlarged volume at the junction 35, the chamber 38 may be provided as a low pressure vessel or volume into which the oral care compound can disperse before being forced out through the ports 24. That is, a purpose of the chamber 38 is to provide low flow resistance that enables it to be easily filled with a gel, liquid, or other oral care compound. For example, the chamber 38 can be set with a volume and/or cross-sectional flow area that are relatively large in comparison to the cross-sectional flow area through the ports 24. In this way, the oral care compound at least partially equalizes in pressure across the entire length of the outlet 18 before individual flows are dispensed through the ports 24. Once the chamber 38 is full, pressure builds and the oral care compound can be forced through the more highly restricted flow profiles of the ports 24.

The total cross-sectional area through the outlet 18 can be set by altering the number of the ports 24 and/or the individual shape or size of each of the ports 24. This in turn can be used to set the location and distribution behavior of the oral care compound through the outlet 18. In one embodiment, the size of each of the ports 24 is the same, while in other embodiments the size of particular ones of the ports 24 are larger or smaller than the others. In one embodiment the flow is evenly distributed across the entire length of the outlet 18, while in another embodiment the flow is biased to certain locations, e.g., the oral care compound is concentrated at the working surfaces of the mouthpiece that correspond to a user's front teeth as opposed to the user's molars.

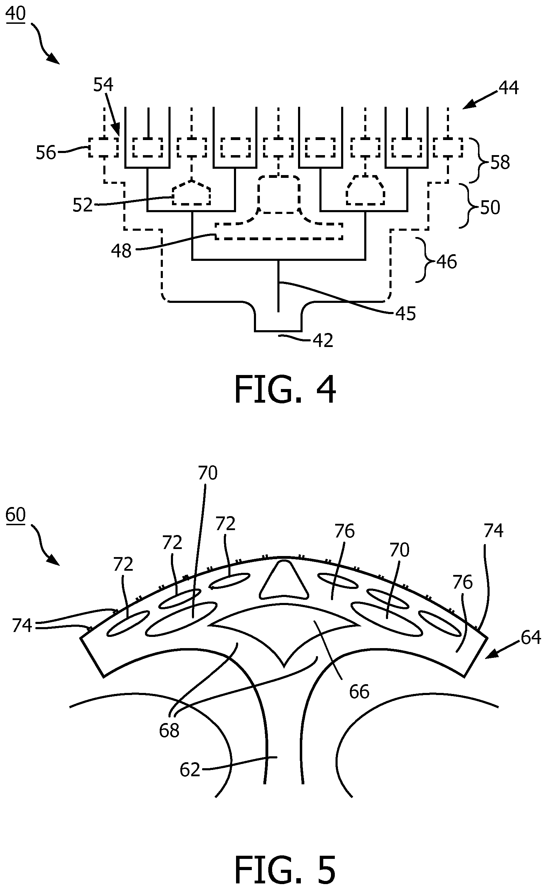

The flow path through the manifold assembly 12 can be distributed in two stages or levels or separation. By this it is meant that the flow path can be divided or split into additional paths and/or dispensing the flow through a relatively restricted flow area. For example, a first level of separation transitions the flow from the trunk 34 into the three channels 36, while a second level of separation transitions the flow from the channels 36 to the ports 24 (twelve of which are illustrated in the embodiment of FIG. 2, as an example). It is to be appreciated that the manifold assembly 12 in FIGS. 1-3 is only one possible arrangement and that manifold assemblies according to other embodiments may include a number that is greater or fewer than three channels extending from a single trunk, a number that is greater or fewer than twelve ports at the outlet, and/or a number that is greater or fewer than two levels of separation. To this end, alternate embodiments are illustrated in and discussed below with respect to FIGS. 4, 5, 6-9, and 10-11.

FIG. 4 schematically illustrates a manifold assembly 40 according to one embodiment. The manifold assembly 40 includes an inlet 42 from which an oral care compound may originate and/or from which pressurization of oral care compound in the manifold assembly 40 may be accomplished, e.g., by an actuatable element as discussed above, for dispensing the oral care compound through an outlet 44. A flow path 45 is illustrated in FIG. 4 extending from the inlet 42 to an outlet 44 of the manifold assembly 40. The flow path 45 has a first level of separation 46 at which the flow path 45 splits, divides, or otherwise transitions from a single flow path into two flow paths as a result of the flow encountering a first partition 48. The partition 48 operates by redirecting the flow from a first direction (e.g., from the inlet 42 toward the outlet 44) to one or more second directions, e.g., perpendicular to the first direction (to the left and right, with respect to the orientation of FIG. 4). Similarly, the flow path 45 has a second level of separation 50 at which each branch of the flow path encounters a second partition 52 that causes the flow to again divide. A plurality of ports 54 (e.g., akin to the ports 24) formed in an outer wall 56 may provide a third level of separation 58 for the flow (e.g., with each branch of the flow path 45. Thus, the manifold assembly 40 shown in FIG. 4 includes three levels of separation. Those of ordinary skill in the art will recognize from the disclosure of the manifold assemblies 12 and 40 how to arrange additional levels of separation if desired.

FIG. 5 illustrates a manifold assembly 60 having an inlet 62 and an outlet 64. The distribution of flow through the manifold assembly 60 is made in four levels. Each level of separation divides the flow by two. The first three levels of separation are accomplished by partitions placed in the gel flow. More particularly, flow from the inlet 62 transitions at a first partition 66 into two channels 68. Unlike the first partition 48 in FIG. 4, the first partition 66 may be tapered, curved, and/or angled in order to facilitate more even separation of the flow into each of the channels 68. The flow in each of the channels 68 separates again at second partitions 70, and again at third partitions 72. The fourth level of separation may be accomplished by a plurality of ports 74 of the outlet 64. The manifold assembly 60 includes pockets 76 arranged throughout the flow path. Akin to the chamber 38, the pockets 76 are configured with a relatively larger flow area to promote the pockets 76 to fill first, thereby enabling the pressure of the oral care compound to at least partially equalize throughout the manifold assembly 60 before the oral care compound transitions through the next level of separation. In turn, this aids in a more even distribution of flow through the outlet 64 and out the ports 74.

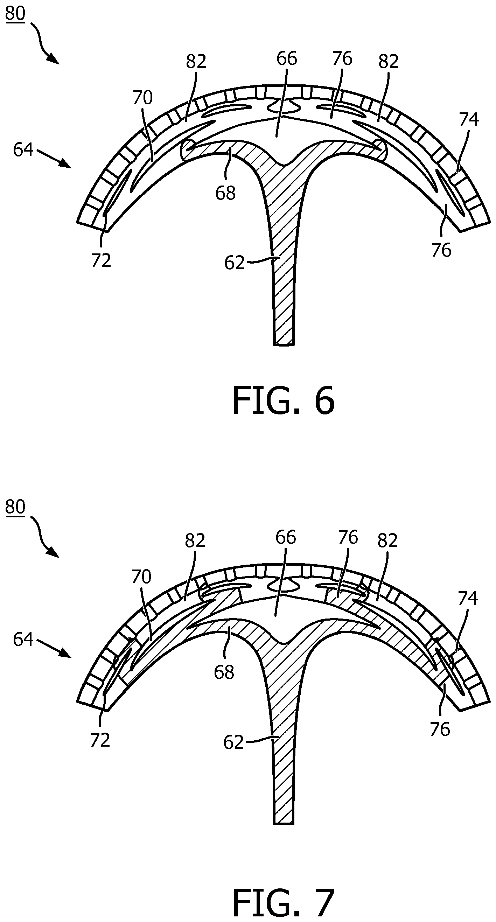

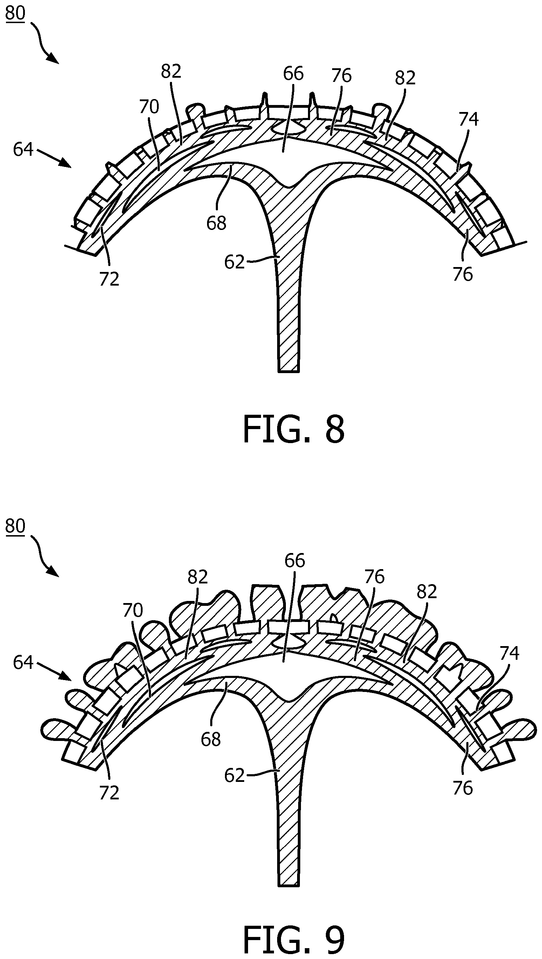

FIGS. 6-9 illustrate a computer implemented flow analysis of a representative oral care compound through a manifold assembly 80 at each level of separation for the manifold assembly 80. It is to be appreciated that the manifold assembly 80 substantially resembles the manifold assembly 60, so like components have been given the same reference numerals in each embodiment (the manifold assembly 60 included a total of six of the third partitions 72, while the manifold assembly 80 only includes four, which creates a pair of pockets 82 as low pressure volumes at those locations). Due to the arrangement of the partitions, levels of separation, and/or low pressure volumes as discussed above, the flow is evenly distributed from the ports 74. As described above, the flow is split at the first level of separation into the channels 68 in FIG. 6, the volume of the pockets 76 is being filled by the flow of oral care compound in FIG. 7, and the volume of the pockets 82 is being filled in FIG. 8, before the oral care compound is substantially evenly distributed through all of the ports 74 in FIG. 9.

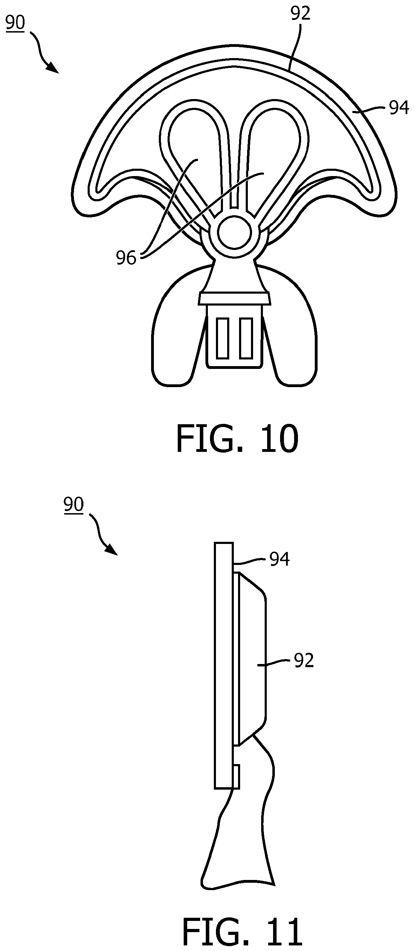

It is to be appreciated that the manifold assemblies disclosed herein may be manufactured in any desired manner, e.g., injection molding, 3D printing, etc. In one embodiment, the manifold assembly is manufactured using one or more films as opposed to more complex molded or printed components. For example, a manifold assembly 90 is illustrated in FIGS. 10 and 11 having a base 92 as an open cavity (e.g., thermoformed film or molded part) that is sealed by a cover film 94. That is, the base 92 includes a plurality of partitions 96 formed therein, and the cover film 94 may be bonded to the partitions 96 of the base 92 (e.g., using adhesives, welds, etc.) to form the channels therebetween. Thus, the manifold assembly 90 may be manufactured without the need for complex gluing or welding processes.

As noted above, a primary challenge of prior oral care compound dispensers (e.g., syringes for whitening gel) is the complexity of the dispensing operation. That is, a user with prior systems must simultaneously push the syringe plunger, follow a narrow path with the nozzle tip, and move the tip at a coordinated speed to match the rate that the gel is dispensed from the syringe. It is thus to be appreciated that the currently disclosed embodiments advantageously do not require a user to set the location of the dispensed oral care compound, the length/distribution profile of the oral care compound, or volume of the oral care compound. Instead, the shape of the outlet of the manifold assembly is configured to align the output ports with the working surface of the mouthpiece when the outlet is engaged with the mouthpiece. This both locates the oral care compound and determines the length, volume, and/or distribution of the oral care compound across the working surface. Flow manipulation to facilitate even distribution may be accomplished by multiple discrete channels, partitions to redirect the flow, and/or low pressure volumes (pockets, chambers, etc.) to equalize pressure at certain points in the flow path between inlet and outlet.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the patent, inventive embodiments may be practiced otherwise than as specifically described. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. As used herein in the specification and in the claims, "or" should be understood to have the same meaning as "and/or" as defined above.

It should also be understood that, unless clearly indicated to the contrary, in any methods claimed herein that include more than one step or act, the order of the steps or acts of the method is not necessarily limited to the order in which the steps or acts of the method are recited.

## Claims

1. An oral care system (10) comprising:
a mouthpiece (14) having a working surface (22);
a manifold assembly (12) having a flow path (45) for an oral care compound terminating at an outlet (18) configured to engage with the mouthpiece and to align with the working surface of the mouthpiece when engaged, the outlet of the manifold assembly having one or more ports (24, 54, 74) extending across a length of the working surface of the mouthpiece; and
an actuatable element (30) configured to dispense the oral care compound from the outlet onto the working surface of the mouthpiece by displacing the oral care compound through the manifold assembly when actuated,
wherein the flow path comprises a plurality of discrete channels,
wherein when the oral care compound is dispensed from the outlet to the mouthpiece it flows through the plurality of discrete channels; and
**characterised in that** the shape of the outlet is matched to the geometry of the working surface of the mouthpiece.

2. The oral care system of claim 1, wherein the manifold assembly includes a plurality of levels of separation (46, 50, 58) in the flow path between an inlet (16) of the manifold assembly and the outlet.

3. The oral care system of claim 2, wherein the flow path of the manifold assembly is defined by a trunk (34) that transitions at a first level of separation into a plurality of channels (36, 68), and wherein the one or more ports form a second level of separation.

4. The oral care system of claim 2, wherein the manifold assembly includes one or more partitions (48, 52, 66, 70, 72) configured to redirect the oral care compound along multiple different channels.

5. The oral care system of claim 2, wherein the manifold assembly includes a plurality of discrete channels (36) extending from a junction (35).

6. The oral care system of claim 1, wherein the manifold assembly includes one or more pockets or chambers (35, 38, 76, 82) that have a relatively larger flow area than surrounding features that enables each of the one or more pockets or chambers to act as a low pressure volume at which pressure in the oral care compound is equalized throughout the manifold assembly.

7. The oral care system of claim 6, wherein the outlet comprises the one or more pockets or chambers in communication with the one or more ports, the one or more chambers or pockets configured to first fill with the oral care compound before the oral care compound is dispensed from outlet via the one or more ports.

8. The oral care system of claim 1, wherein the actuatable element includes a plunger.

9. The oral care system of claim 1, wherein the actuatable element is part of an injector assembly (15) that is separate from the manifold assembly.

10. The oral care system of claim 1, wherein the manifold assembly is formed from a film cover (94) that is bonded to a base (92).

11. A manifold assembly (12) comprising:
a flow path (45) separating into a plurality of discrete channels (36, 68) at a first level of separation for a flow of oral care compound through the manifold assembly;
an outlet (18) having one or more ports (24, 54, 74) forming a second level of separation of the flow of oral care compound, the outlet complementarily formed with respect to a working surface (22) of a mouthpiece (14) to align the one or more ports with the working surface when the outlet is engaged with the mouthpiece, the one or more ports of the outlet of the manifold assembly extending across a length of the working surface of the mouthpiece; and
an actuatable element (30) configured to dispense a predetermined volume of the oral care compound from the outlet via the one or more ports by displacing the oral care compound through the manifold assembly to the mouthpiece through a plurality of discrete channels when actuated;
**characterised in that** the shape of the outlet is matched to the geometry of the working surface of the mouthpiece.

12. A method of applying an oral care compound to a working surface of a mouthpiece, **characterised by** comprising the steps of:
engaging a manifold assembly with the mouthpiece, the manifold assembly configured to align one or more ports of an outlet with the working surface of the mouthpiece when engaged, the one or more ports of the outlet of the manifold assembly extending across a length of the working surface of the mouthpiece;
displacing the oral care compound through the manifold assembly;
separating the oral care compound into a plurality of discrete channels at a plurality of levels of separation of a flow of the oral care compound; and
dispensing the oral care compound from the outlet to the mouthpiece via the one or more ports via the plurality of discrete channels;
**characterised in that** the shape of the outlet is matched to the geometry of the working surface of the mouthpiece.

13. The method of claim 12, wherein the displacing includes actuating a plunger and the dispensing includes dispensing a predetermined volume of the oral care compound set by dimensions of the plunger.

14. The method of claim 12, wherein the separating includes redirecting the flow into multiple channels with a partition of the manifold assembly.

15. The method of claim 12, wherein the separating includes first filling a low pressure volume before transitioning to a next one of the levels of separation.

## Patentansprüche

1. Mundpflegesystem (10), umfassend:
ein Mundstück (14) mit einer Arbeitsfläche (22);
eine Verteilerbaugruppe (12) mit einem Strömungsweg (45) für eine Mundpflegeverbindung, der an einem Auslass (18) endet, der so konfiguriert ist, dass er mit dem Mundstück in Eingriff kommt und sich bei Eingriff mit der Arbeitsfläche des Mundstücks ausrichtet, dem Auslass der Verteilerbaugruppe mit einer oder mehreren Öffnungen (24, 54, 74), die sich über die Länge der Arbeitsfläche des Mundstücks erstrecken; und
ein betätigbares Element (30), das so konfiguriert ist, dass es bei Betätigung das Mundpflegemittel aus dem Auslass auf die Arbeitsfläche des Mundstücks abgibt, indem es das Mundpflegemittel durch die Verteilerbaugruppe verdrängt,
wobei der Strömungsweg eine Vielzahl diskreter Kanäle umfasst,
wobei die Mundpflegeverbindung, wenn sie vom Auslass zum Mundstück abgegeben wird, durch die Vielzahl diskreter Kanäle fließt; und
**dadurch gekennzeichnet, dass** die Form des Auslasses auf die Geometrie der Arbeitsfläche des Mundstücks abgestimmt ist.

2. Mundpflegesystem nach Anspruch 1, wobei die Verteilerbaugruppe mehrere Trennebenen (46, 50, 58) im Strömungsweg zwischen einem Einlass (16) der Verteilerbaugruppe und dem Auslass umfasst.

3. Mundpflegesystem nach Anspruch 2, wobei der Strömungsweg der Verteileranordnung durch einen Hauptteil (34) definiert ist, der auf einer ersten Trennebene in eine Vielzahl von Kanälen (36, 68) übergeht, und wobei der eine oder Weitere Ports bilden eine zweite Trennebene.

4. Mundpflegesystem nach Anspruch 2, wobei die Verteilerbaugruppe eine oder mehrere Trennwände (48, 52, 66, 70, 72) umfasst, die so konfiguriert sind, dass sie die Mundpflegeverbindung entlang mehrere verschiedenen Kanäle umleiten.

5. Mundpflegesystem nach Anspruch 2, wobei die Verteilerbaugruppe mehrere diskrete Kanäle (36) umfasst, die sich von einer Verbindungsstelle (35) erstrecken.

6. Mundpflegesystem nach Anspruch 1, wobei die Verteilerbaugruppe eine oder mehrere Taschen oder Kammern (35, 38, 76, 82) umfasst, die einen relativ größeren Strömungsquerschnitt als die umgebenden Merkmale aufweisen, die es jeder der einen oder mehreren Taschen oder ermöglichen Kammern fungieren als Niederdruckvolumen, bei dem der Druck in der Mundpflegemasse in der gesamten Verteilerbaugruppe ausgeglichen wird.

7. Mundpflegesystem nach Anspruch 6, wobei der Auslass die eine oder mehreren Taschen oder Kammern umfasst, die mit dem einen oder den mehreren Anschlüssen in Verbindung stehen, wobei die eine oder mehreren Kammern oder Taschen so konfiguriert sind, dass sie sich vor der Mundpflege zunächst mit der Mundpflegeverbindung füllen, die Verbindung wird vom Auslass über einen oder mehrere Anschlüsse abgegeben.

8. Mundpflegesystem nach Anspruch 1, wobei das betätigbare Element einen Kolben umfasst.

9. Mundpflegesystem nach Anspruch 1, wobei das betätigbare Element Teil einer Injektorbaugruppe (15) ist, die von der Verteilerbaugruppe getrennt ist.

10. Mundpflegesystem nach Anspruch 1, wobei die Verteileranordnung aus einer Folienabdeckung (94) besteht, die mit einer Basis (92) verbunden ist.

11. Verteilerbaugruppe (12), umfassend:
einen Strömungsweg (45), der sich auf einer ersten Trennebene in eine Vielzahl diskreter Kanäle (36, 68) aufteilt, damit ein Mundpflegemittel durch die Verteileranordnung fließen kann;
einen Auslass (18) mit einer oder mehreren Öffnungen (24, 54, 74), die eine zweite Trennebene des Stroms der Mundpflegeverbindung bilden, wobei der Auslass komplementär in Bezug auf eine Arbeitsfläche (22) eines Mundstücks (14) ausgebildet ist, um die eine oder mehreren Öffnungen mit der Arbeitsfläche auszurichten, wenn der Auslass mit dem Mundstück in Eingriff ist, wobei sich die eine oder mehreren Öffnungen des Auslasses der Verteileranordnung über eine Länge der Arbeitsfläche des Mundstücks erstrecken; und
ein betätigbares Element (30), das so konfiguriert ist, dass es bei Betätigung ein vorbestimmtes Volumen der Mundpflegezusammensetzung vom Auslass über die eine oder mehrere Öffnungen abgibt, indem es die Mundpflegezusammensetzung durch die Verteilerbaugruppe über mehrere diskreten Kanäle zum Mundstück verdrängt; **dadurch gekennzeichnet, dass** die Form des Auslasses auf die Geometrie der Arbeitsfläche des Mundstücks abgestimmt ist.

12. Verfahren zum Auftragen eines Mundpflegemittels auf die Arbeitsfläche eines Mundstücks, **gekennzeichnet durch** die folgenden Schritte:
Ineinandergreifen einer Verteilerbaugruppe mit dem Mundstück, wobei die Verteilerbaugruppe so konfiguriert ist, dass sie im in Eingriff befindlichen Zustand einen oder mehrere Anschlüsse eines Auslasses mit der Arbeitsfläche des Mundstücks ausrichtet, wobei sich der eine oder die mehreren Anschlüsse des Auslasses der Verteilerbaugruppe über eine Länge der Arbeitsfläche erstrecken Oberfläche des Mundstücks;
Verdrängen der Mundpflegezusammensetzung durch die Verteilerbaugruppe;
Aufteilen der Mundpflegeverbindung in mehrere diskreten Kanäle auf mehreren Ebenen der Trennung eines Flusses der Mundpflegeverbindung; und
Verteilen der Mundpflegeverbindung vom Auslass zum Mundstück über die eine oder mehreren Öffnungen und die mehreren diskreten Kanäle;
**dadurch gekennzeichnet, dass** die Form des Auslasses auf die Geometrie der Arbeitsfläche des Mundstücks abgestimmt ist.

13. Verfahren nach Anspruch 12, wobei das Verschieben das Betätigen eines Kolbens umfasst und das Abgeben das Abgeben eines vorbestimmten Volumens der Mundpflegeverbindung umfasst, das durch die Abmessungen des Kolbens festgelegt ist.

14. Verfahren nach Anspruch 12, wobei das Trennen das Umleiten des Flusses in mehrere Kanäle mit einer Unterteilung der Verteilerbaugruppe umfasst.

15. Verfahren nach Anspruch 12, wobei das Trennen zunächst das Füllen eines Niederdruckvolumens vor dem Übergang zu einem nächsten der Trennniveaus umfasst.

## Revendications

1. Système de soins bucco-dentaires (10) comprenant:
un embout buccal (14) ayant une surface de travail (22);
un ensemble collecteur (12) comportant un trajet d'écoulement (45) pour un composé de soins bucco-dentaires se terminant au niveau d'une sortie (18) configurée pour s'engager avec l'embout buccal et pour s'aligner avec la surface de travail de l'embout buccal lorsqu'il est engagé, la sortie de l'ensemble collecteur ayant un ou plusieurs orifices (24, 54, 74) s'étendant sur une longueur de la surface de travail de l'embout buccal; et
un élément actionnable (30) configuré pour distribuer le composé de soins bucco-dentaires depuis la sortie sur la surface de travail de l'embout buccal en déplaçant le composé de soins bucco-dentaires à travers l'ensemble collecteur lorsqu'il est actionné,
dans lequel le trajet d'écoulement comprend une pluralité de canaux discrets,
dans lequel, lorsque le composé de soins bucco-dentaires est distribué depuis la sortie jusqu'à l'embout buccal, il s'écoule à travers la pluralité de canaux discrets;
et
**caractérisé en ce que** la forme de la sortie est adaptée à la géométrie de la surface de travail de l'embout.

2. Système de soins bucco-dentaires selon la revendication 1, dans lequel l'ensemble collecteur comprend une pluralité de niveaux de séparation (46, 50, 58) dans le trajet d'écoulement entre une entrée (16) de l'ensemble collecteur et la sortie.

3. Système de soins bucco-dentaires selon la revendication 2, dans lequel le trajet d'écoulement de l'ensemble collecteur est défini par un tronc (34) qui passe à un premier niveau de séparation en une pluralité de canaux (36, 68), et dans lequel le ou les plus de ports forment un deuxième niveau de séparation.

4. Système de soins bucco-dentaires selon la revendication 2, dans lequel l'ensemble collecteur comprend une ou plusieurs cloisons (48, 52, 66, 70, 72) configurées pour rediriger le composé de soins bucco-dentaires le long de multiples canaux différents.

5. Système de soins bucco-dentaires selon la revendication 2, dans lequel l'ensemble collecteur comprend une pluralité de canaux discrets (36) s'étendant à partir d'une jonction (35).

6. Système de soins bucco-dentaires selon la revendication 1, dans lequel l'ensemble collecteur comprend une ou plusieurs poches ou chambres (35, 38, 76, 82) qui ont une zone d'écoulement relativement plus grande que les éléments environnants qui permettent à chacune de la ou des poches ou chambres pour agir comme un volume à basse pression auquel la pression dans le composé de soins bucco-dentaires est égalisée dans l'ensemble collecteur.

7. Système de soins bucco-dentaires de la revendication 6, dans lequel la sortie comprend une ou plusieurs poches ou chambres en communication avec un ou plusieurs ports, une ou plusieurs chambres ou poches configurées pour se remplir d'abord de composé de soins bucco-dentaires avant que le composé de soins bucco-dentaires ne soit distribué à partir de la sortie par le biais d'un ou plusieurs ports.

8. Système de soins bucco-dentaires selon la revendication 1, dans lequel l'élément actionnable comprend un piston.

9. Système de soins bucco-dentaires selon la revendication 1, dans lequel l'élément actionnable fait partie d'un ensemble injecteur (15) qui est séparé de l'ensemble collecteur.

10. Système de soins bucco-dentaires selon la revendication 1, dans lequel l'ensemble collecteur est formé à partir d'un film de protection (94) qui est lié à une base (92).

11. Ensemble collecteur (12) comprenant:
un trajet d'écoulement (45) se séparant en une pluralité de canaux discrets (36, 68) à un premier niveau de séparation pour un écoulement de composé de soins bucco-dentaires à travers l'ensemble collecteur;
une sortie (18) comportant un ou plusieurs orifices (24, 54, 74) formant un deuxième niveau de séparation du flux de composé de soins bucco-dentaires, la sortie étant formée de manière complémentaire par rapport à une surface de travail (22) d'un embout buccal (14) pour aligner le ou les orifices avec la surface de travail lorsque la sortie est en prise avec l'embout buccal, le ou les orifices de la sortie de l'ensemble collecteur s'étendant sur une longueur de la surface de travail de l'embout buccal; et
un élément actionnable (30) configuré pour distribuer un volume prédéterminé du composé de soins bucco-dentaires depuis la sortie via le ou les orifices en déplaçant le composé de soins bucco-dentaires à travers l'ensemble collecteur jusqu'à l'embout buccal à travers une pluralité de canaux discrets lorsqu'il est actionné; **caractérisé en ce que** la forme de la sortie est adaptée à la géométrie de la surface de travail de l'embout.

12. Procédé d'application d'un composé d'hygiène buccale sur une surface de travail d'un embout buccal, **caractérisé en ce qu'**il comprend les étapes suivantes:
engager un ensemble de collecteurs avec l'embout, l'ensemble de collecteurs configuré pour aligner un ou plusieurs ports d'une sortie avec la surface de travail de l'embout lorsqu'il est engagé, le ou les ports de la sortie de l'ensemble de collecteurs s'étendant sur une longueur de la surface de travail de l'embout;
déplacer le composé de soins bucco-dentaires à travers l'ensemble collecteur;
séparer le composé de soins bucco-dentaires en une pluralité de canaux discrets au niveau d'une pluralité de niveaux de séparation d'un flux du composé de soins bucco-dentaires; et
distribuer le composé de soins bucco-dentaires de la sortie à l'embout buccal via le ou les ports via la pluralité de canaux discrets;
**caractérisé en ce que** la forme de la sortie est adaptée à la géométrie de la surface de travail de l'embout.

13. Procédé selon la revendication 12, dans lequel le déplacement comprend l'actionnement d'un piston et la distribution comprend la distribution d'un volume prédéterminé du composé de soins bucco-dentaires défini par les dimensions du piston.

14. Procédé selon la revendication 12, dans lequel la séparation comprend la redirection du flux vers de multiples canaux avec une cloison de l'ensemble collecteur.

15. Procédé selon la revendication 12, dans lequel la séparation comprend d'abord le remplissage d'un volume à basse pression avant de passer à l'un des niveaux de séparation suivant.
